# EUROPÄISCHE PATENTSCHRIFT

(11) **EP 3 239 417 B1**
(45) Veröffentlichungstag und Bekanntmachung des Hinweises auf die Patenterteilung: **08.04.2020**
(21) Anmeldenummer: 17000121.8
(22) Anmeldetag: 25.01.2017
(51) Int. Cl.: E03C 1/08, E03C 1/084, G05D 7/01

(54) **SANITÄRE EINSETZEINHEIT**
SANITARY INSERT UNIT
UNITÉ D'INSERTION SANITAIRE

(30) Priorität: 27.04.2016 DE 202016002719 U
(43) Veröffentlichungstag der Anmeldung: 01.11.2017
(73) Patentinhaber: Neoperl GmbH, 79379 Müllheim (DE)
(72) Erfinder: Städtler, Georg, 79379 Müllheim (DE)
(74) Vertreter: Börjes-Pestalozza, Henrich

(56) Entgegenhaltungen:
- WO-A1-98/16693
- DE-A1-102004 040 082
- DE-A1-102012 015 947
- DE-B3-102006 062 983
- DE-U1-202010 007 835
- US-A1- 2016 053 471

## Beschreibung

Die Erfindung betrifft eine sanitäre Einsetzeinheit mit einem Einsetzgehäuse, das in den Wasserauslauf einer sanitären Auslaufarmatur einsetzbar ist und zumindest in einem Teilbereich einen rechteckigen Querschnitt hat, derart, dass die Längsseiten des Einsetzgehäuses im Vergleich zu den quer zur Längserstreckung des Einsetzgehäuses orientierten Schmalseiten eine größere Länge aufweisen, und mit einem im Einsetzgehäuse der Einsetzeinheit vorgesehenen Durchflussmengenregler, der wenigstens einen, vom Wasser durchströmten Durchflusskanal hat, in welchem Durchflusskanal ein Drosselkörper vorgesehen ist, der in einer quer zur Durchströmrichtung orientierten Einbauebene angeordnet ist, wobei wenigstens ein Steuerspalt vorgesehen ist, der zwischen einer zumindest abschnittsweise profilierten, den Durchflusskanal begrenzenden Wandung und einer benachbarten Außenseite des Drosselkörpers angeordnet ist, und wobei der Drosselkörper unter dem Druck des durchströmenden Mediums derart elastisch verformbar ist, dass sich der lichte Durchflussquerschnitt des Steuerspalts durch Einformen des Drosselkörpers in die Profilierung der zumindest bereichsweise profilierten Wandung verengt.

Aus der DE 10 2012 015 947 A1 kennt man bereits eine sanitäre Einsetzeinheit der eingangs erwähnten Art. Die vorbekannte Einsetzeinheit weist ein Einsetzgehäuse auf, das am Wasserauslauf einer sanitären Auslaufarmatur und somit an der Mündung der sanitären Versorgungsleitung eingesetzt werden kann. Die vorbekannte Einsetzeinheit hat einen Durchflussmengenregler, der eine vom Wasser durchströmte Durchflussöffnung aufweist. Diese Durchflussöffnung ist als ein, mit seiner Längserstreckung quer zur Durchflussrichtung orientiertes Langloch und somit unrund und keinesfalls ringförmig ausgestaltet. In dieser Durchflussöffnung ist ein Drosselkörper vorgesehen, der steg- oder schnurförmig ausgebildet ist und deshalb an gegenüberliegenden Seiten jeweils ein freies Steg- oder Schnurende hat. Dieser langgestreckte Drosselkörper ist in einer quer zur Durchströmrichtung orientierten Einbauebene angeordnet. Wenigstens zwischen einer zumindest abschnittsweise profilierten, die Durchflussöffnung begrenzenden Wandung und der benachbarten Außenseite des Drosselkörpers ist ein Steuerspalt vorgesehen. Dabei ist der Drosselkörper unter dem Druck des durchströmenden Mediums derart elastisch verformbar, dass sich der lichte Durchflussquerschnitt des zumindest einen, vom Wasser durchströmten Steuerspalts durch Einformen des Drosselkörpers in die Profilierung der zumindest bereichsweise profilierten Wandung mit steigendem Druck des zuströmenden Wassers zunehmend verengt.

Aus der WO 98/16 693 A ist bereits eine sanitäre Auslaufvorrichtung vorbekannt, die als Brausekopf oder auch als Strahlregler oder Strahlbelüfter ausgebildet sein kann. Die vorbekannte Auslaufvorrichtung weist eine abströmseitig angeordnete Strahlreguliereinrichtung auf, die eine Vielzahl von Durchflusslöchern hat. Diese Strahlreguliereinrichtung der vorbekannten Auslaufvorrichtung weist auslaufseitig eine Lochplatte auf, die zumindest in wenigstens einem als Lochfeld ausgebildeten Teilbereich ihrer Plattenebene mehrere Durchflusslöcher hat. Dabei ist in Figur 10 der WO 98/16 693 A dargestellt, dass die vorbekannte Auslaufvorrichtung zumindest in einem Auslaufstirnende eine als Strahlreguliereinrichtung dienende Lochplatte aufweisen kann, die einen langgestreckten gerundeten Umriss hat. Des Weiteren ist auf Seite 9, Zeilen 10 bis 14 der WO 98/16 693 A erwähnt, dass vor der Strahlreguliereinrichtung beziehungsweise vor einer Strahlzerlegeeinrichtung ein Durchflussmengenregler vorgeschaltet sein kann. Dabei wird in der WO 98/16 693 A offen gelassen, ob der Durchflussmengenregler im Vorrichtungsgehäuse der vorbekannten Auslaufvorrichtung oder in einem der Auslaufvorrichtung mit Abstand vorgeschalteten Leitungsabschnitt der das zuströmende Wasser führenden Wasserleitung angeordnet sein soll. Ebenso offen lässt die WO 98/16 693 A, wie der verwendete Durchflussmengenregler aufgebaut sein und funktionieren soll. Insbesondere ist der WO 98/16 693 A nicht zu entnehmen, ob in einem Durchflusskanal des vorbekannten Durchflussmengenreglers ebenfalls ein Drosselkörper vorgesehen sein soll.

Aus der DE 20 2010 007 835 U1 kennt man bereits einen Durchflussmengenregler, der mit dem zuströmseitigen Stirnumfangsrandbereich seines schalenförmigen Reglergehäuses derart auf ein, mit einem abströmseitigen Strahlregler lösbar verbundenes Vorsatzsieb aufsetzbar ist, dass das Aufsatzsieb mit seinem über den Stirnumfangsrandbereich des Strahlreglers vorstehenden Teilbereich in dem zur Abströmseite des Reglergehäuses hin offenen Gehäuse-Innenraum aufgenommen ist. Da der Strahlregler, das Vorsatzsieb und der zuströmseitig vorgeschaltete Durchflussmengenregler in das Hülseninnere eines hülsenförmigen Auslaufmundstücks eingesetzt sind, das mit Hilfe eines am Hülsenaußenumfang des Auslaufmundstücks vorgesehenen Gewinde in ein Gegengewinde im Wasserauslauf einer sanitären Auslaufarmatur einschraubbar ist, weisen diese Bestandteile allesamt zwangsläufig einen kreisrunden Querschnitt auf.

Aus der DE 10 2004 040 082 A1 kennt man bereits ein Wasserauslaufmundstück, das am Wasserauslauf eines im Querschnitt rechteckigen Wasserhahns angeordnet ist. Das vorbekannte Wasserauslaufmundstück ist wassereintrittsseitig mit einem Wasserschlauch verbunden. Dabei ist der mit dem Wasserschlauch verbundene Eingangsstutzen etwa mittig an der zuströmseitigen Gehäusestirnseite des vorbekannten Wasserauslaufmundstücks vorgesehen. Im Gehäuse des vorbekannten Wasserauslaufmundstücks wird das durchströmende Wasser in Vor- und Aufweitungsräumen des Gehäuseinnenraums mehrfach abgebremst, bis das Wasser an einem quaderförmigen Formelement austreten kann. Dieses Formelement weist drei identische, nebeneinander angeordnete und kreisrunde Formkanäle auf, die in der Summe einen aus drei kreisrunden Einzelstrahlen gebildeten, im Querschnitt breiten Auslaufstrahl bilden sollen. In der DE 10 2004 040 082 A1 scheint deshalb die althergebrachte Überzeugung zum Ausdruck zu kommen, dass sich ein flacher Strahl bereits nach einer kurzen freien Strecke eher zu einem runden Strahlbild zusammenziehen wird, dass sich ein runder Strahl am besten zu einem stabilen und homogenen Auslaufstrahl formen lässt, und dass deshalb ein Rechteckstrahl am besten aus mehreren, im Querschnitt runden Einzelstrahlen gebildet werden sollte.

Es besteht daher die Aufgabe, eine sanitäre Einsetzeinheit der eingangs erwähnten Art zu schaffen, die einen Durchflussmengenregler hat, der auch vergleichsweise flach ausgestaltet sein kann und sich durch ein verbessertes Regelverhalten auszeichnet.

Die erfindungsgemäße Lösung dieser Aufgabe besteht bei der sanitären Einsetzeinheit der eingangs erwähnten Art insbesondere darin, dass der Drosselkörper ringförmig ausgebildet und derart in der Einsetzeinheit gehalten ist, dass der ringförmige Drosselkörper in seiner Längserstreckung in zwei, in Längsrichtung orientierte erste Ringabschnitte sowie zwei, die ersten Ringabschnitte beidseits miteinander verbindenden gekurvten zweiten Ringabschnitte unterteilt ist, und dass ein Steuerspalt zwischen jedem der ersten Ringabschnitte und einer benachbarten, zumindest abschnittsweise profilierten Wandung vorgesehen ist.

Die erfindungsgemäße sanitäre Einsetzeinheit weist ein Einsetzgehäuse auf, das in den Wasserauslauf einer sanitären Auslaufarmatur einsetzbar ist. Das Einsetzgehäuse ist an den lichten Querschnitt der Auslaufarmatur im Bereich ihres Wasserauslaufs angepasst und weist zumindest in einem Teilbereich einen rechteckigen Querschnitt auf, wozu die Längsseiten des Einsetzgehäuses im Vergleich zu dem quer zur Längserstreckung des Einsetzgehäuses orientierten Schmalseiten eine größere Länge aufweisen. Im Einsetzgehäuse der Einsetzeinheit ist ein Durchflussmengenregler vorgesehen, der das pro Zeiteinheit durchströmende Wasservolumen druckunabhängig auf einen festgelegten Maximalwert einregeln und begrenzen soll. Dieser Durchflussmengenregler hat dazu wenigstens einen, vom Wasser durchströmten Durchflusskanal, in welchem Durchflusskanal ein Drosselkörper aus elastischem Material vorgesehen ist. Dieser Drosselkörper, der in einer quer zur Durchströmrichtung orientierten Einbauebene angeordnet ist, ist ringförmig oder umlaufend ausgebildet und derart in der Einsetzeinheit gehalten, dass der ringförmige Drosselkörper in seiner Längserstreckung in zwei, in Längsrichtung orientierte erste Ringabschnitte sowie zwei, die ersten Ringabschnitte beidseits miteinander verbindenden gekurvten zweiten Ringabschnitte unterteilt ist. Der Drosselkörper hat somit eine in Draufsicht längsgestreckte oder auch ovale Form. Im Inneren der Einsetzeinheit ist wenigstens ein Steuerspalt vorgesehen, der zwischen einer zumindest abschnittsweise profilierten, den Durchflusskanal begrenzenden Wandung und einer benachbarten Außenseite des Drosselkörpers angeordnet ist. Dieser Steuerspalt ist zwischen jedem der ersten Ringabschnitte des aus elastischem Material registrierten Drosselkörpers und einer benachbarten, zumindest abschnittsweise profilierten Wandung vorgesehen. Unter dem Druck des anströmenden Mediums ist der Drosselkörper derart elastisch verformbar, dass sich der lichte Durchflussquerschnitt des Steuerspalts durch Einformen des Drosselkörpers in die Profilierung der zumindest bereichsweise profilierten Wandung verengt.

Da der ringförmige Drosselkörper in der erfindungsgemäßen Einsetzeinheit nicht kreisrund - , sondern vielmehr derart eingelegt ist, dass er zwei in Längsrichtung orientierte erste Ringabschnitte sowie zwei, die ersten Ringabschnitte beidseits miteinander verbindenden gekurvten zweiten Ringabschnitte hat, kann die Einsetzeinheit auch vergleichsweise flach und mit einem dementsprechend schmalen Querschnitt ausgestaltet werden. Durch die langgestreckte Anordnung kann dem elastischen Drosselkörper mehr Stützfläche geboten werden. Da ein ringförmiger Drosselkörper mit größeren Längsspannungen in das Einsetzgehäuse eingelegt werden kann und da der Drosselkörper sich dadurch besser in seine Ausgangsposition zurückbewegen kann, wird ein verbessertes Regelverhalten des in der erfindungsgemäßen Einsetzeinheit vorgesehenen Durchflussmengenreglers erreicht.

Dabei sieht eine bevorzugte Ausführungsform gemäß der Erfindung vor, dass der Durchflussmengenregler ein quer zur Durchströmrichtung orientiertes Trägerteil hat, in welchem Trägerteil eine zur Zuströmseite hin offenen Nut vorgesehen ist, in welche Nut der Drosselkörper eingelegt ist.

Damit der Durchflussmengenregler in dem im Querschnitt rechteckigen Einsetzgehäuse trotz seiner Ringform eine möglichst große Regelfläche bietet, ist es vorteilhaft, wenn die Nut wenigstens an den etwa achsparallel zueinander angeordneten Längsseiten ihrer Nutwandung die Profilierung trägt und wenn der Drosselkörper zwischen sich und wenigstens dem etwa achsparallel zueinander angeordneten Längsseiten der Nutwandung den Steuerspalt begrenzt.

Um den ringförmigen Drosselkörper des verwendeten Durchflussmengenreglers in einer möglichst langgestreckten Form zu halten, ist es vorteilhaft, wenn in der Nut zumindest ein Ringträger vorsteht, auf welchen Ringträger der ringförmige Drosselkörper derart aufgesetzt ist, dass dieser Drosselkörper eine Ringform einnimmt, die sich in zwei, in Längsrichtung orientierte erste Ringabschnitte sowie zwei, die ersten Ringabschnitte beidseits miteinander verbindenden gekurvten zweiten Ringabschnitte unterteilen lässt.

Der Ringträger kann durch zumindest zwei, am Nutgrund der Nut vorstehende und voneinander beabstandete Vorsprünge gebildet sein. Eine bevorzugte Ausführungsform gemäß der Erfindung sieht jedoch demgegenüber vor, dass der Ringträger durch zumindest eine, sich quer zur Durchströmrichtung erstreckende und in der Nut vorstehende Längswand gebildet ist.

Dabei kann der Ringträger wenigstens an den gegenüberliegenden Außenseiten seiner zumindest einen Längswand jeweils konturiert sein.

Um den elastischen Drosselkörper im Inneren der erfindungsgemäßen Einsetzeinheit auf einfache Weise in die gewünschte Form zu bringen, ist es vorteilhaft, in die zumindest eine Längswand des Ringträgers an ihren außenliegenden Schmalseiten gerundet ist.

Dabei kann es vorteilhaft sein, wenn die zumindest eine Längswand des Ringträgers an ihren außenliegenden Schmalseiten als gerundete Querschnittsverdickung ausgebildet ist.

Das gute Regelverhalten des in der erfindungsgemäßen Einsetzeinheit verwendeten Durchflussmengenreglers wird begünstigt, wenn die Profilierung durch in Durchströmrichtung orientierte Längsrillen gebildet ist, und wenn benachbarte Längsrillen durch einen demgegenüber vorstehenden Wandungsabschnitt der zumindest einen Längswand beabstandet sind.

Da der Ringträger vorzugsweise durch eine insbesondere leistenförmige Längswand gebildet ist, ist es zweckmäßig, wenn die Längsrillen der Profilierung etwa parallele Längsmittelebenen haben.

Damit das im Steuerspalt eingeregelte Wasservolumen das Einsetzgehäuse der erfindungsgemäßen Einsetzeinheit durchströmen kann, ist es vorteilhaft, wenn am Nutgrund der Nut auf der Abströmseite der Längsrillen jeweils zumindest eine das Trägerteil des Durchflussmengenreglers durchsetzende Durchflussöffnung vorgesehen ist.

Damit die erfindungsgemäße Einsetzeinheit das durchströmende Wasser zu einem nicht spritzenden und möglichst homogen austretenden Flachstrahl oder Strahlband formen kann, ist es vorteilhaft, wenn die Einsetzeinheit einen Strahlformer hat, der dem Durchflussmengenregler in Strömungsrichtung nachgeschaltet ist.

Zum gleichen Zweck sieht eine andere Ausführungsform gemäß der Erfindung vor, dass die Einsetzeinheit einen Strahlbelüfter hat, der dem Durchflussmengenregler in Strömungsrichtung nachgeschaltet ist, und dass der das durchströmende Wasser mit Umgebungsluft durchmischende Strahlbelüfter einen Strahlzerleger aufweist, der eine Mehrzahl von Zerlegeröffnungen hat, die das durchströmende Wasser in eine entsprechende Anzahl von Einzelstrahlen aufteilen.

Damit das die Zerlegeröffnungen durchströmende Wasser auf der Abströmseite des Strahlzerlegers einen Unterduck erzeugt, mittels dem Umgebungsluft in das Gehäuseinnere des Einsetzgehäuses eingesaugt werden kann, ist es vorteilhaft, wenn die Zerlegeröffnungen des Strahlzerlegers sich in Durchströmrichtung verengen. Die sich in Durchströmrichtung verengenden Zerlegeröffnungen bedingen eine Geschwindigkeitserhöhung der Einzelstrahlen, die gemäß der bernoullischen Gleichung auf der Abströmseite des Strahlzerlegers einen entsprechenden Unterdruck zur Folge hat.

Eine bevorzugte Ausführungsform gemäß der Erfindung, die die Bildung eines nicht-spritzenden Auslaufstrahls begünstigt, sieht vor, dass die Zerlegeröffnungen des Strahlzerlegers jeweils einen zuströmseitigen Öffnungsabschnitt, der sich trichterförmig verengt, und einen abströmseitigen Öffnungsabschnitt haben, der vorzugsweise einen etwa gleichbleibenden lichten Öffnungsquerschnitt aufweist.

Um die im Strahlzerleger gebildeten Einzelstrahlen auf der Abströmseite der erfindungsgemäßen Einsetzeinheit wieder zu einem möglichst homogenen Flachstrahl zusammenzufügen, ist es vorteilhaft, wenn an der abströmseitigen Gehäusestirnseite des Einsetzgehäuses eine Waben-, Gitter- oder Netzstruktur vorgesehen ist.

Dabei kann diese Waben-, Gitter- oder Netzstruktur aus sich einander an Kreuzungsknoten kreuzenden Stegen gebildet sein, die zwischen sich Auslauföffnungen umgrenzen.

Eine besonders funktionssichere Ausführungsform gemäß der Erfindung sieht vor, dass die an der abströmseitigen Gehäusestirnseite des Einsetzgehäuses vorgesehene Waben-, Gitter- oder Netzstruktur als Strömungsgleichrichter ausgebildet ist, wenn dazu die die Auslauföffnungen umgrenzenden Stege eine in Durchströmrichtung orientierte Längserstreckung haben, die gleich oder größer ist als der maximale lichte Durchmesser der Auslauföffnungen. Somit wird das durchfließende Wasser entlang der Stege über eine vergleichsweise lange Wegstrecke geführt und kann an der Auslaufstirnseite der Einsetzeinheit als homogener Flachstrahl ausströmen.

Um ein Eindrücken der als Strömungsgleichrichter dienenden Struktur in das Gehäuseinnere des Einsetzgehäuses zu verhindern, ist es vorteilhaft, wenn die an der abströmseitigen Gehäusestirnseite des Einsetzgehäuses vorgesehene Waben-, Gitter- oder Netzstruktur an das Einsetzgehäuse einstückig angeformt ist.

Das Durchmischen des in Einzelstrahlen durch das Einsetzgehäuse durchströmenden Wassers mit der in das Gehäuseinnere eingesaugten Umgebungsluft wird begünstigt, wenn zwischen dem Strahlzerleger und der abströmseitigen Waben-, Gitter- oder Netzstruktur zumindest ein Einsetzteil vorgesehen ist, das ebenfalls eine Waben-, Gitter- oder Netzstruktur aus einander an Kreuzungsknoten kreuzenden Stegen hat.

Ist die erfindungsgemäße Einsetzeinheit in einer bevorzugten Ausführungsform als Strahlbelüfter ausgebildet, ist es vorteilhaft, wenn in einer Gehäuseumfangswandung des Einsetzgehäuses und dort in einem in Strömungsrichtung dem Strahlzerleger nachfolgenden Wandungsabschnitt wenigstens eine Belüftungsöffnung vorgesehen ist.

Weiterbildungen gemäß der Erfindung ergeben sich aus den Ansprüchen in Verbindung mit der Beschreibung sowie den Figuren. Nachstehend wird die Erfindung anhand bevorzugter Ausführungsbeispiele noch näher beschrieben.

Es zeigt:
- Fig. 1: eine sanitäre Einsetzeinheit, die ein zuströmseitiges Vorsatz- oder Filtersieb sowie einen abströmseitigen Strahlbelüfter aufweist, zwischen denen ein Durchflussmengenregler zwischengeschaltet ist, wobei die in Figur 1 gezeigte Draufsicht die Einsetzeinheit bei entferntem Vorsatz- oder Filtersieb mit Blick auf den darunter befindlichen Durchflussmengenregler zeigt,
- Fig. 2: die Einsetzeinheit aus Figur 1 in einem Längsschnitt, wobei die Einsetzeinheit hier an ihrer zuströmseitigen Stirnseite auch das Vorsatz- oder Filtersieb trägt,
- Fig. 3: die Einsetzeinheit aus den Figuren 1 und 2 in einem gegenüber Figur 2 um 90° gedrehten Längsschnitt in Schnittebene III-III aus Figur 2,
- Fig. 4: die Einsetzeinheit in einer auseinandergezogenen Perspektivdarstellung ihrer Bestandteile,
- Fig. 5: ein Trägerteil des in der Einsetzeinheit gemäß den Figuren 1 bis 4 verwendeten Durchflussmengenreglers in einer perspektivischen Draufsicht,
- Fig. 6: das Trägerteil aus Figur 5 in einer perspektivischen Draufsicht mit eingelegtem elastischem Drosselkörper,
- Fig. 7: das Trägerteil aus Figur 5 und 6 in einer Draufsicht,
- Fig. 8: das Trägerteil aus den Figuren 5 bis 7 in einer Draufsicht auf die Zuströmseite bei eingelegtem elastischem Drosselkörper,
- Fig. 9: das Trägerteil mit eingelegtem Drosselkörper in einem Längsschnitt durch Schnittebene IX-IX auf Figur 8,
- Fig.10: ein gegenüber den Figuren 5 bis 9 abweichend ausgestaltetes Trägerteil, das Bestandteil eines in der Einsetzeinheit gemäß den Figuren 1 bis 4 gezeigten Durchflussmengenreglers sein kann,
- Fig.11: das Trägerteil aus Figur 10 ohne den aus elastischem Material hergestellten Drosselkörper,
- Fig.12: das Trägerteil aus den Figuren 10 und 11 in einer Draufsicht bei eingelegtem Drosselkörper,
- Fig.13: das mit eingelegtem Drosselkörper dargestellte Trägerteil aus den Figuren 10 bis 12 in einem Längsschnitt durch Schnittebene XIII-XIII in Figur 12, und
- Fig.14: das Trägerteil aus den Figuren 10 bis 13 in einem gegenüber Figur 13 um 90° gedrehten Längsschnitt in Schnittebene XIV-XIV gemäß Figur 12.

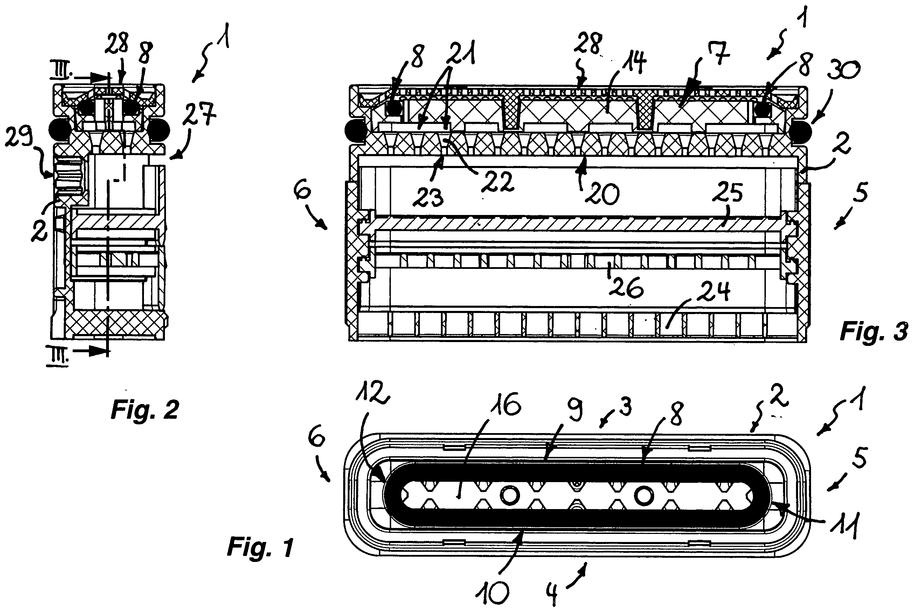

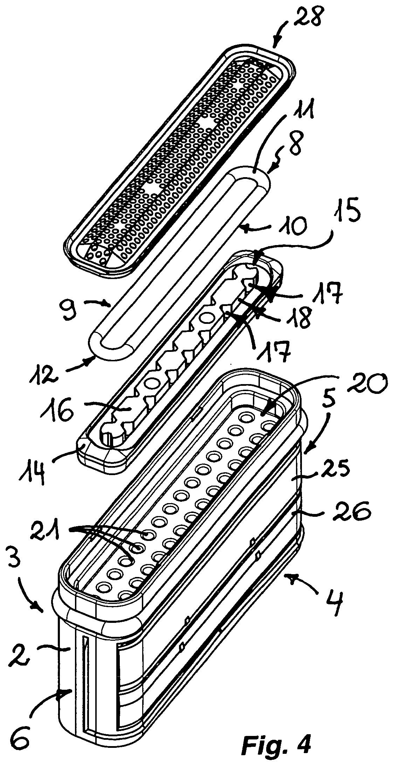

In den Figuren 1 bis 4 ist eine sanitäre Einsetzeinheit 1 dargestellt, die ein Einsetzgehäuse 2 hat, das in dem Wasserauslauf einer hier nicht weiter gezeigten sanitären Auslaufarmatur einsetzbar ist. Das Einsetzgehäuse 2 ist an den lichten Querschnitt der Auslaufarmatur im Bereich ihres Wasserauslaufs angepasst und weit zumindest in einem Teilbereich einen rechteckigen Querschnitt auf, wozu die Längsseiten 3, 4 des Einsetzgehäuses 2 im Vergleich zu den quer zur Längserstreckung des Einsetzgehäuses 2 orientierten Schmalseiten 5, 6 eine größere Länge aufweisen.

Im Einsetzgehäuse 2 der Einsetzeinheit 1 ist ein Durchflussmengenregler 7 vorgesehen, der das pro Zeiteinheit durchströmende Wasservolumen druckunabhängig auf einen festgelegten Maximalwert einregeln und begrenzen soll. Der Durchflussmengenregler 7 hat dazu wenigstens einem, vom Wasser durchströmten Durchflusskanal, in welchem Durchflusskanal ein Drosselkörper 8 aus elastischem Material vorgesehen ist. Der Drosselkörper 8, der in einer quer zur Durchströmrichtung orientierten Einbauebene angeordnet ist, ist ringförmig ausgebildet und derart im Durchflussmengenregler 7 und dessen Trägerteil 14 gehalten, dass der ringförmige Drosselkörper 8 in seiner Längserstreckung in zwei, in Längsrichtung orientierte erste Ringabschnitte 9, 10 sowie zwei, die ersten Ringabschnitte 9, 10 beidseits miteinander verbindende gekurvte zweite Ringabschnitte 11, 12 unterteilt ist. Im Inneren der Einsetzeinheit 1 ist wenigstens ein Steuerspalt vorgesehen, der zwischen einer zumindest abschnittsweise profilierten, den Durchflusskanal begrenzenden Wandung und einer benachbarten Außenseite des Drosselkörpers 8 angeordnet ist. Dieser Steuerspalt ist zumindest zwischen jedem der ersten Ringabschnitte 9, 10 des aus elastischem Material hergestellten Drosselkörpers 8 und einer benachbarten, zumindest abschnittsweise profilierten Wandung vorgesehen. Unter dem Druck des anströmenden Wassers ist der Drosselkörper 8 derart elastisch verformbar, dass sich der lichte Durchflussquerschnitt des Steuerspalts durch Einformen des Drosselkörpers 8 in die Profilierung der zumindest bereichsweise profilierten Wandung verengt.

Da der ringförmige Drosselkörper 8 in der Einsetzeinheit 1 nicht kreisrund -, sondern derart eingelegt ist, dass er zwei in Längsrichtung orientierte erste Ringabschnitte 9, 10 sowie zwei, die ersten Ringabschnitte 9, 10 beidseits miteinander verbindende gekurvte zweite Ringabschnitte 11, 12 bildet, kann die Einsetzeinheit 1 auch vergleichsweise flach und mit einem dementsprechend schmalen Querschnitt ausgestaltet werden. Durch die langgestreckte Anordnung kann dem elastischen Drosselkörper 8 mehr Stützfläche geboten werden. Da ein einförmiger Drosselkörper 8 mit größeren Längsspannungen in den Durchflussmengenregler 7 und dessen Trägerteil 14 eingelegt werden kann, und da der Drosselkörper 8 sich dadurch besser in seine Ausgangsposition zurückbewegen kann, wird ein verbessertes Regelverhalten des in der Einsetzeinheit 1 vorgesehenen Durchflussmengenreglers erreicht.

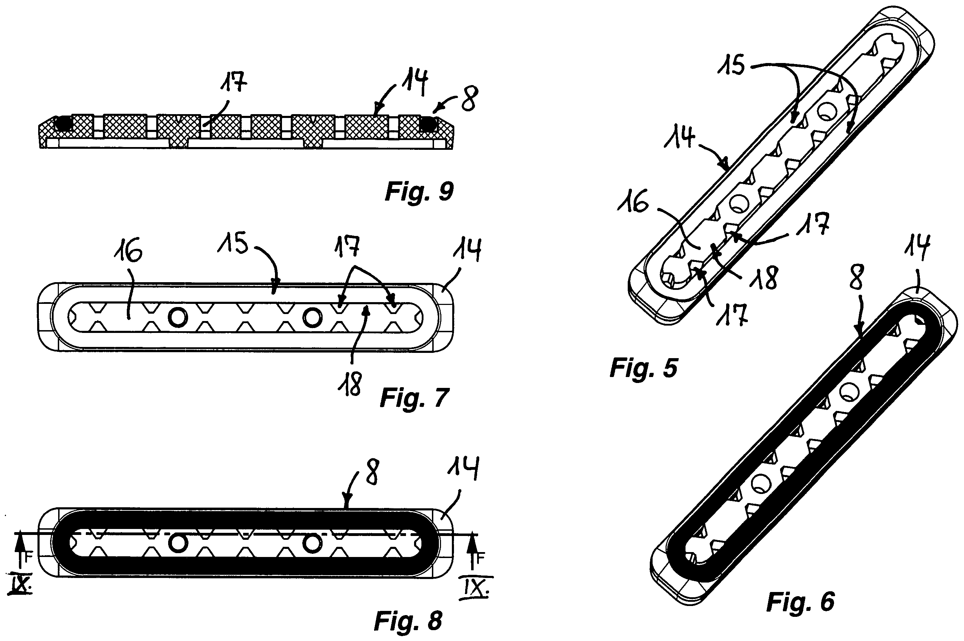

Der Durchflussmengenregler 7 hat hier ein quer zur Durchströmrichtung orientiertes Trägerteil 14, in welchem Trägerteil 14 eine zur Zuströmseite hin offene Nut 15 vorgesehen ist. In die Nut 15 ist der elastische Drosselkörper 8 eingelegt. Bei dem in den Figuren 1 bis 9 gezeigten Ausführungsbeispiel steht in der Nut 15 ein Ringträger 16 vor, auf den der ringförmige Drosselkörper 8 aufgeschoben ist. Der Drosselkörper 8 ist auf den hier leistenförmigen Ringträger derart aufgeschoben, dass der Drosselkörper 8 die oben beschriebene Ringform einnimmt, die sich in die in Längsrichtung orientierten ersten Ringabschnitte 9, 10 sowie die beiden, die ersten Ringabschnitte 9, 10 beidseits miteinander verbindenden gekurvten zweiten Ringabschnitte 11, 12 unterteilen lässt.

Der Ringträger 16 kann durch voneinander beabstandete Vorsprünge gebildet sein. In dem hier gezeigten Ausführungsbeispiel gemäß den Figuren 1 bis 9 ist der Ringträger in der Nut vorstehende Längswand gebildet. Dabei ist der Ringträger 16 an den gegenüberliegenden Außenseiten seiner zumindest einen Längswand jeweils konturiert ausgestaltet. Die zumindest eine Längswand des Ringträgers 16 ist an ihren außenliegenden Schmalseiten gerundet. Die an den gegenüberliegenden Außenseiten der Längswand vorgesehene Profilierung wird in dem in den Figuren 1 bis 9 gezeigten Ausführungsbeispiel durch in Durchströmrichtung orientierte Längsrillen 17 gebildet, wobei benachbarte Längsrillen 17 jeweils durch einen demgegenüber vorstehenden Wandungsabschnitt 18 beabstandet sind.

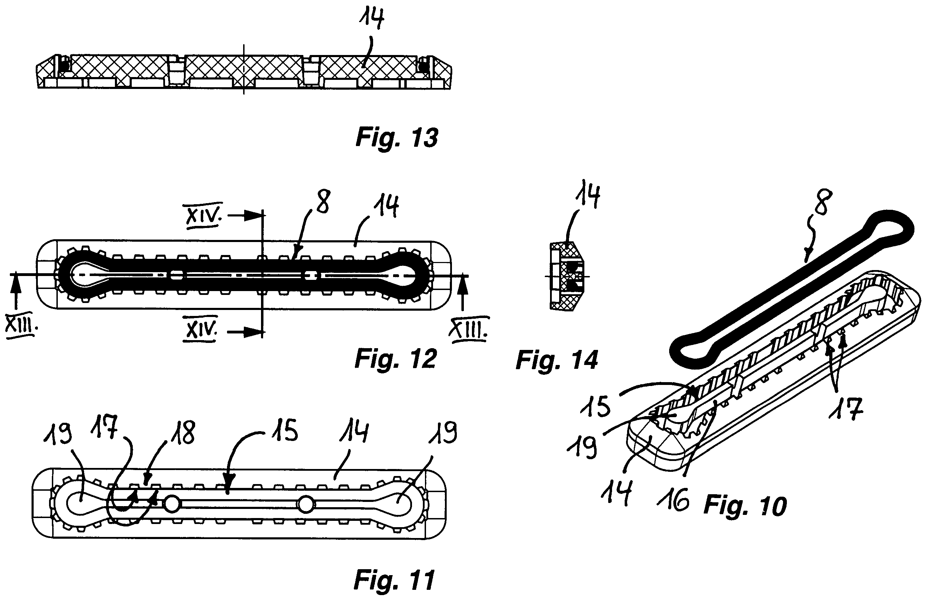

In den Figuren 10 bis 14 ist ein gegenüber den Figuren 1 bis 9 abweichend ausgestaltetes Ausführungsbeispiel des Trägerteils 14 gezeigt. Das in den Figuren 10 bis 14 gezeigte Ausführungsbeispiel des Trägerteils 14 trägt an den etwa achsparallel zueinander angeordneten Längsseiten der Nutwandung die aus den Längsrillen 17 gebildete Profilierung, während demgegenüber der über den Nutgrund vorstehende Ringträger 16 hier unprofiliert ausgebildet ist und an seinen außenliegenden Schmalseiten eine gerundete Querschnittsverdickung 19 hat.

Aus einem Vergleich der Figuren 1 bis 14 wird deutlich, dass der Drosselkörper 8 in die zur Zuströmseite hin offene Nut 15 des Trägerteils 14 eingelegt ist. Am Nutgrund der Nut 15 ist auf der Abströmseite der Längsrillen 17 jeweils zumindest eine das Trägerteil 14 des Durchflussmengenreglers durchsetzende Durchflussöffnung vorgesehen.

Die in den Figuren 1 bis 4 gezeigte Einsetzeinheit 1 hat einen Strahlbelüfter, der dem Durchflussmengenregler in Strömungsrichtung nachgeschaltet ist. Der das durchströmende Wasser mit Umgebungsluft durchmischende Strahlbelüfter weist einen Strahlzerleger 20 auf, der eine Mehrzahl von Zerlegeröffnungen 21 hat, die das durchströmende Wasser in eine entsprechende Anzahl von Einzelstrahlen aufteilen. Die Zerlegeröffnungen 21 des Strahlzerlegers 20 verengen sich in Durchströmrichtung, wobei die Zerlegeröffnungen 21 jeweils einen zuströmseitigen Öffnungsabschnitt 22, der sich trichterförmig verengt, und einen abströmseitigen Öffnungsabschnitt 23 haben, der vorzugsweise einen etwa gleichbleibenden lichten Öffnungsquerschnitt aufweist.

An der abströmseitigen Gehäusestirnseite des Einsetzgehäuses 2 ist eine Gitterstruktur 24 vorgesehen. Diese Gitterstruktur wird hier aus einander an Kreuzungsknoten kreuzenden Stegen gebildet, die zwischen sich Auslauföffnungen umgrenzen. Um die an der abströmseitigen Gehäusestirnseite des Einsetzgehäuses 2 vorgesehene Gitterstruktur 24 als Strömungsgleichrichter auszubilden, weisen die die Auslauföffnungen dieser Gitterstruktur 24 umgrenzenden Stege eine in Durchströmrichtung orientierte Längserstreckung auf, die vorzugsweise gleich oder größer ist als der maximale lichte Durchmesser der Auslauföffnungen. In den Längsschnitten gemäß den Figuren 2 und 3 ist erkennbar, dass die Gitterstruktur 24 einstückig an das Einsetzgehäuse 2 angeformt.

Zwischen dem Strahlzerleger 20 und der abströmseitigen Gitterstruktur 24 ist zumindest ein Einsetzteil und hier zwei Einsetzteile 25, 26 vorgesehen, die ebenfalls eine Gitterstruktur aus einander an Kreuzungsknoten kreuzenden Stegen haben, welche Stege zwischen sich Durchströmöffnungen umgrenzen. In Figur 2 ist erkennbar, dass in der Gehäuseumfangswandung des Einsetzgehäuses und dort in einem in Strömungsrichtung dem Strahlzerleger 20 nachfolgenden Wandungsabschnitt wenigstens eine Belüftungsöffnung 27 vorgesehen ist.

Die in den Figuren 1 bis 4 gezeigte Einsetzeinheit 1 weist auf ihrer Zuströmseite ein Vorsatz- oder Filtersieb auf. Das Einsetzgehäuse 2 der Einsetzeinheit 1 hat an seiner Zuströmseite eine zuströmseitig offene Aufnahmehöhlung, in die zum einen das Trägerteil 14 und zum anderen auch das Vorsatz- oder Filtersieb 28 eingelegt ist. Das Vorsatz- oder Filtersieb ist am Gehäuseinnenumfang des Einsetzgehäuses mittels einer Schnappverbindung derart gehalten, dass zwischen dem Vorsatz- oder Filtersieb 28 und dem in Strömungsrichtung nachfolgenden Strahlzerleger 20 auch das dazwischen angeordnete Trägerteil 14 gesichert ist. Das Einsetzgehäuse 2 der Einsetzeinheit 1 wird im Wasserauslauf der sanitären Auslaufeinheit mittels einer Madenschraube gesichert, die auf der der Sichtseite abgewandten Rückseite der Auslaufarmatur vorgesehen ist und in eine Einschrauböffnung 29 des Einsetzgehäuses 2 vorsteht. Das Einsetzgehäuse 2 weist eine umlaufende Ringnut auf, in die ein Dichtring 30 eingelegt ist. Der Dichtring 30 dichtet den Ringspalt zwischen dem Gehäuseaußenumfang des Einsetzgehäuses 2 einerseits und dem Innenumfang der Auslaufarmatur im Bereich ihres Wasserauslaufs andererseits ab.

### Bezugszeichenliste

- 1: Einsetzeinheit
- 2: Einsetzgehäuse
- 3: Längsseite des Einsetzgehäuses
- 4: Längsseite des Einsetzgehäuses
- 5: Schmalseite des Einsetzgehäuses
- 6: Schmalseite des Einsetzgehäuses
- 7: Durchflussmengenregler
- 8: Drosselkörper
- 9: erster Ringabschnitt
- 10: erster Ringabschnitt
- 11: zweiter Ringabschnitt
- 12: zweiter Ringabschnitt
- 14: Trägerteil
- 15: Nut
- 16: Ringträger
- 17: Längsrille
- 18: Wandungsabschnitt
- 19: Querschnittsverdickung
- 20: Strahlzerleger
- 21: Zerlegeröffnung
- 22: zuströmseitiger Öffnungsabschnitt
- 23: abströmseitiger Öffnungsabschnitt
- 24: Gitterstruktur
- 25: Einsetzteil
- 26: Einsetzteil
- 27: Belüftungsöffnung
- 28: Filtersieb
- 29: Einschrauböffnung
- 30: Dichtring

## Patentansprüche

1. Sanitäre Einsetzeinheit (1) mit einem Einsetzgehäuse (2), das in den Wasserauslauf einer sanitären Auslaufarmatur einsetzbar ist und zumindest in einem Teilbereich einen rechteckigen Querschnitt hat, derart, dass die Längsseiten (3, 4) des Einsetzgehäuses (2) im Vergleich zu den quer zur Längserstreckung des Einsetzgehäuses (2) orientierten Schmalseiten (5, 6) eine größere Länge aufweisen, und mit einem im Einsetzgehäuse (2) der Einsetzeinheit (1) vorgesehenen Durchflussmengenregler (7), der wenigstens einen, vom Wasser durchströmten Durchflusskanal hat, in welchem Durchflusskanal ein Drosselkörper (8) vorgesehen ist, der in einer quer zur Durchströmrichtung orientierten Einbauebene angeordnet ist, wobei wenigstens ein Steuerspalt vorgesehen ist, der zwischen einer zumindest abschnittsweise profilierten, den Durchflusskanal begrenzenden Wandung und einer benachbarten Außenseite des Drosselkörpers (8) angeordnet ist, und wobei der Drosselkörper (8) unter dem Druck des durchströmenden Mediums derart elastisch verformbar ist, dass sich der lichte Durchflussquerschnitt des Steuerspalts durch Einformen des Drosselkörpers (8) in die Profilierung der zumindest bereichsweise profilierten Wandung verengt, **dadurch gekennzeichnet, dass** der Drosselkörper (8) ringförmig ausgebildet und derart in der Einsetzeinheit (1) gehalten ist, dass der ringförmige Drosselkörper (8) in seiner Längserstreckung in zwei, in Längsrichtung orientierte erste Ringabschnitte (9, 10) sowie zwei, die ersten Ringabschnitte (9, 10) beidseits miteinander verbindende gekurvte zweite Ringabschnitte (11, 12) unterteilt ist, und dass ein Steuerspalt zwischen jedem der ersten Ringabschnitte (9, 10) und einer benachbarten, zumindest abschnittsweise profilierten Wandung vorgesehen ist.

2. Sanitäre Einsetzeinheit nach Anspruch 1, **dadurch gekennzeichnet, dass** der Durchflussmengenregler ein quer zur Durchströmrichtung orientiertes Trägerteil (14) hat, in welchem Trägerteil (14) eine zur Zuströmseite hin offene Nut (15) vorgesehen ist, in welche Nut (15) der Drosselkörper (8) eingelegt ist.

3. Sanitäre Einsetzeinheit nach Anspruch 2, **dadurch gekennzeichnet, dass** die Nut (15) wenigstens an den etwa achsparallel zueinander angeordneten Längsseiten ihrer Nutwandung die Profilierung trägt, und dass der Drosselkörper (8) zwischen sich und wenigstens den etwa achsparallel zueinander angeordneten Längsseiten der Nutwandung den Steuerspalt begrenzt.

4. Sanitäre Einsetzeinheit nach Anspruch 2 oder 3, **dadurch gekennzeichnet, dass** in der Nut (15) zumindest ein Ringträger (16) vorsteht, auf welchen Ringträger (16) der ringförmige Drosselkörper (8) derart aufgesetzt ist, dass dieser Drosselkörper (8) eine Ringform einnimmt, die sich in die zwei, in Längsrichtung orientierte erste Ringabschnitte (9, 10) sowie die zwei, die ersten Ringabschnitte (9, 10) beidseits miteinander verbindenden gekurvten zweiten Ringabschnitte (11, 12) unterteilt.

5. Sanitäre Einsetzeinheit nach Anspruch 4, **dadurch gekennzeichnet, dass** der Ringträger (16) durch zumindest eine in der Nut (15) vorstehende Längswand gebildet ist.

6. Sanitäre Einsetzeinheit nach Anspruch 5, **dadurch gekennzeichnet, dass** der Ringträger (16) an den gegenüberliegenden Außenseiten seiner zumindest einen Längswand jeweils konturiert ist.

7. Sanitäre Einsetzeinheit nach Anspruch 5 oder 6, **dadurch gekennzeichnet, dass** die zumindest eine Längswand des Ringträgers (16) an ihren außenliegenden Schmalseiten gerundet ist.

8. Sanitäre Einsetzeinheit nach Anspruch 7, **dadurch gekennzeichnet, dass** die zumindest eine Längswand des Ringträgers (16) an ihren außenliegenden Schmalseiten als gerundete Querschnittsverdickung (19) ausgebildet ist.

9. Sanitäre Einsetzeinheit nach einem der Ansprüche 4 bis 8, **dadurch gekennzeichnet, dass** die Profilierung durch in Durchströmrichtung orientierte Längsrillen (17) gebildet ist, und dass benachbarte Längsrillen (17) durch einen demgegenüber vorstehenden Wandungsabschnitt (18) der zumindest einen, den Ringträger (16) bildenden Längswand, beabstandet sind.

10. Sanitäre Einsetzeinheit nach Anspruch 9, **dadurch gekennzeichnet, dass** die Längsrillen (17) der Profilierung etwa parallele Längsmittelebenen haben.

11. Sanitäre Einsetzeinheit nach Anspruch 9 oder 10, **dadurch gekennzeichnet, dass** am Nutgrund der Nut (15) auf der Abströmseite der Längsrillen (17) jeweils zumindest eine das Trägerteil (14) durchsetzende Durchflussöffnung vorgesehen ist.

12. Sanitäre Einsetzeinheit nach einem der Ansprüche 1 bis 11, **dadurch gekennzeichnet, dass** die Einsetzeinheit (1) einen Strahlformer hat, der dem Durchflussmengenregler in Strömungsrichtung nachgeschaltet ist.

13. Sanitäre Einsetzeinheit nach einem der Ansprüche 1 bis 11, **dadurch gekennzeichnet, dass** die Einsetzeinheit (1) einen Strahlbelüfter hat, der dem Durchflussmengenregler in Strömungsrichtung nachgeschaltet ist, und dass der das durchströmende Wasser mit Umgebungsluft durchmischende Strahlbelüfter einen Strahlzerleger (20) aufweist, der eine Mehrzahl von Zerlegeröffnungen (21) hat, die das durchströmende Wasser in eine entsprechende Anzahl von Einzelstrahlen aufteilen.

14. Sanitäre Einsetzeinheit nach Anspruch 13, **dadurch gekennzeichnet, dass** die Zerlegeröffnungen (21) des Strahlzerlegers (20) sich in Durchströmrichtung verengen.

15. Sanitäre Einsetzeinheit nach Anspruch 13 oder 14, **dadurch gekennzeichnet, dass** die Zerlegeröffnungen (21) des Strahlzerlegers (20) jeweils einen zuströmseitigen Öffnungsabschnitt (22), der sich trichterförmig verengt, und einen abströmseitigen Öffnungsabschnitt (23) haben, der vorzugsweise einen etwa gleichbleibenden lichten Öffnungsquerschnitt aufweist.

16. Sanitäre Einsetzeinheit nach einem der Ansprüche 1 bis 15, **dadurch gekennzeichnet, dass** an der abströmseitigen Gehäusestirnseite des Einsetzgehäuses (2) eine Waben-, Netz- oder Gitterstruktur (24) vorgesehen ist.

17. Sanitäre Einsetzeinheit nach Anspruch 16, **dadurch gekennzeichnet, dass** die Waben-, Netz- oder Gitterstruktur (24) aus einander an Kreuzungsknoten kreuzenden Stegen gebildet ist, die zwischen sich Auslauföffnungen umgrenzen.

18. Sanitäre Einsetzeinheit nach Anspruch 17, **dadurch gekennzeichnet, dass** die an der abströmseitigen Gehäusestirnseite des Einsetzgehäuses (2) vorgesehene Waben-, Netz- oder Gitterstruktur (24) als Strömungsgleichrichter ausgebildet ist, und dass dazu die die Auslauföffnungen umgrenzenden Stege eine in Durchströmrichtung orientierte Längserstreckung haben, die gleich oder größer ist als der maximale lichte Durchmesser der Auslauföffnungen.

19. Sanitäre Einsetzeinheit nach einem der Ansprüche 16 bis 18, **dadurch gekennzeichnet, dass** die an der abströmseitigen Gehäusestirnseite des Einsetzgehäuses (2) vorgesehene Waben-, Netz- oder Gitterstruktur (24) an das Einsetzgehäuse (2) einstückig angeformt ist.

20. Sanitäre Einsetzeinheit nach einem der Ansprüche 16 bis 19, **dadurch gekennzeichnet, dass** zwischen dem Strahlzerleger (20) und der abströmseitigen Waben-, Netz- oder Gitterstruktur (24) zumindest ein Einsetzteil (25, 26) vorgesehen ist, das ebenfalls eine Waben-, Netz- oder Gitterstruktur aus einander an Kreuzungsknoten kreuzenden Stegen hat.

21. Sanitäre Einsetzeinheit nach einem der Ansprüche 13 bis 20, **dadurch gekennzeichnet, dass** in einer Gehäuseumfangswandung des Einsetzgehäuses (2) und dort in einem in Strömungsrichtung dem Strahlzerleger (20) nachfolgenden Wandungsabschnitt wenigstens eine Belüftungsöffnung (27) vorgesehen ist.

## Claims

1. Sanitary insert unit (1) having an insert housing (2) which is insertable into the water outlet of a sanitary outlet fitting and in at least a part-region has a rectangular cross section, in such a manner that the longitudinal sides (3, 4) of the insert housing (2) in comparison with the narrow sides (5, 6) that are oriented so as to be transverse to the longitudinal extent of the insert housing (2) have a greater magnitude, and having a flow regulator (7) which is provided in the insert housing (2) of the insert unit (1) and which has at least one water-perfused flow duct in which flow duct a throttle body (8) which is disposed in an installation plane that is oriented so as to be transverse to the perfusion direction is provided, wherein at least one control gap which is disposed between an at least, in portions, profiled wall that delimits the flow duct and an adjacent external side of the throttle body (8) is provided, and wherein the throttle body (8) under the pressure of the perfusing medium is elastically deformable in such a manner that the available flow cross section of the control gap is constricted by the throttle body (8) being moulded into the profiled feature of the at least, in portions, profiled wall, **characterized in that** the throttle body (8) is annularly configured and is held in the insert unit (1) in such a manner that the annular throttle body (8) in the longitudinal extent thereof is subdivided into two first annular portions (9, 10) that are oriented in the longitudinal direction, and into two curved second annular portions (11, 12) that interconnect the first annular portions (9, 10) on both sides, and **in that** a control gap is provided between each of the first annular portions (9, 10) and an adjacent and at least, in portions, profiled wall.

2. Sanitary insert unit according to Claim 1, **characterized in that** the flow regulator has a support part (14) that is oriented so as to be transverse to the perfusion direction and in which support part (14) a groove (15) that is open toward the inflow side is provided, in which groove (15) the throttle body (8) is placed.

3. Sanitary insert unit according to Claim 2, **characterized in that** the groove (15) carries the profiled feature at least on the longitudinal sides of the groove wall thereof that are disposed so as to be approximately mutually axially parallel, and **in that** the throttle body (8) between itself and at least the longitudinal sides of the groove wall that are disposed so as to be approximately mutually axially parallel delimits the control gap.

4. Sanitary insert unit according to Claim 2 or 3, **characterized in that** at least one annular support (16), on which annular support (16) the annular throttle body (8) is placed in such a manner that this throttle body (8) assumes an annular shape which is subdivided into two first annular portions (9, 10), that are oriented in the longitudinal direction, and into the two curved second annular portions (11, 12) that interconnect the first annular portions (9, 10) on both sides, projects in the groove (15).

5. Sanitary insert unit according to Claim 4, **characterized in that** the annular support (16) is formed by at least one longitudinal wall that projects in the groove (15).

6. Sanitary insert unit according to Claim 5, **characterized in that** the annular support (16) on each of the opposite outer sides of the at least one longitudinal wall thereof is contoured.

7. Sanitary insert unit according to Claim 5 or 6, **characterized in that** the at least one longitudinal wall of the annular support (16), on the outward narrow sides thereof, is rounded.

8. Sanitary insert unit according to Claim 7, **characterized in that** the at least one longitudinal wall of the annular support (16), on the outward narrow sides thereof, is configured as a rounded cross-sectional enlargement (19).

9. Sanitary insert unit according to one of Claims 4 to 8, **characterized in that** the profiled feature is formed by longitudinal flutes (17) that are oriented in the perfusion direction, and **in that** adjacent longitudinal flutes (17) by way of a wall portion (18) that projects in relation to the latter are spaced apart from the at least one longitudinal wall that forms the annular support (16) .

10. Sanitary insert unit according to Claim 9, **characterized in that** the longitudinal flutes (17) of the profiled feature have approximately parallel longitudinal central planes.

11. Sanitary insert unit according to Claim 9 or 10, **characterized in that** in each case at least one flow opening that penetrates the support part (14) is provided on the groove base of the groove (15) on the outflow side of the longitudinal flutes (17) .

12. Sanitary insert unit according to one of Claims 1 to 11, **characterized in that** the insert unit (1) has a jet former which in the flow direction is disposed downstream of the flow regulator.

13. Sanitary insert unit according to one of Claims 1 to 11, **characterized in that** the insert unit (1) has a jet aerator which in the flow direction is disposed downstream of the flow regulator, and **in that** the jet aerator that mixes the perfusing water with ambient air has a jet splitter (20) which has a plurality of splitter openings (21) which split the perfusing water into a corresponding number of individual jets.

14. Sanitary insert unit according to Claim 13, **characterized in that** the splitter openings (21) of the jet splitter (20) are constricted in the perfusion direction.

15. Sanitary insert unit according to Claim 13 or 14, **characterized in that** the splitter openings (21) of the jet splitter (20) each have one inflow-side opening portion (22) which is constricted in the shape of a funnel, and have one outflow-side opening portion (23) which preferably has an approximately constant available opening cross section.

16. Sanitary insert unit according to one of Claims 1 to 15, **characterized in that** a honeycomb, net, or mesh structure (24) is provided on the outflow-side of the front end of the housing of the insert housing (2).

17. Sanitary insert unit according to Claim 16, **characterized in that** the honeycomb, net, or mesh structure (24) is formed by webs that mutually intersect at intersection points, said webs defining outlet openings therebetween.

18. Sanitary insert unit according to Claim 17, **characterized in that** the honeycomb, net, or mesh structure (24) that is provided on the outflow-side of the front end of the housing of the insert housing (2) is configured as a flow rectifier, and **in that** to this end, the webs that delimit the outlet openings have a longitudinal extent that is oriented in the perfusion direction and that is equal to or larger than the maximum available diameter of the outlet openings.

19. Sanitary insert unit according to one of Claims 16 to 18, **characterized in that** the honeycomb, net, or mesh structure (24) that is provided on the outflow-side of the front end of the housing of the insert housing (2) is integrally moulded to the insert housing (2).

20. Sanitary insert unit according to one of Claims 16 to 19, **characterized in that** at least one insert part (25, 26) which likewise has a honeycomb, net, or mesh structure of webs that mutually intersect at intersection points is provided between the jet splitter (20) and the outflow-side honeycomb, net, or mesh structure (24).

21. Sanitary insert unit according to one of Claims 13 to 20, **characterized in that** at least one aerating opening (27) is provided in a circumferential housing wall of the insert housing (2) and therein in a wall portion that in the flow direction follows downstream of the jet splitter (20).

## Revendications

1. Unité d'insertion sanitaire (1) comprenant un boîtier d'insertion (2) qui peut être inséré dans la sortie d'eau d'une robinetterie sanitaire et qui présente au moins dans une zone partielle une section transversale rectangulaire, de telle manière que les longs côtés (3, 4) du boîtier d'insertion (2) présentent une plus grande longueur, par comparaison avec les côtés étroits (5, 6), orientés transversalement à l'extension longitudinale du boîtier d'insertion (2), et comprenant un régulateur de débit (7) prévu dans le boîtier d'insertion (2) de l'unité d'insertion (1), qui comporte au moins un canal d'écoulement parcouru par l'eau, canal d'écoulement dans lequel il est prévu un corps d'étranglement (8), qui est disposé dans un plan de montage orienté transversalement à la direction d'écoulement, dans laquelle il est prévu au moins une fente de commande, qui est disposée entre une paroi au moins localement profilée limitant le canal d'écoulement et un côté extérieur du corps d'étranglement (8) proche, et dans laquelle le corps d'étranglement (8) peut être déformé élastiquement sous la pression du milieu en écoulement, de telle manière que la section transversale d'écoulement libre de la fente de commande se réduise par enfoncement du corps d'étranglement (8) dans le profilage de la paroi au moins localement profilée, **caractérisée en ce que** le corps d'étranglement (8) est réalisé en forme d'anneau et est maintenu dans l'unité d'insertion (1) de telle manière que le corps d'étranglement annulaire (8) soit divisé dans son extension longitudinale en deux premières parties annulaires (9, 10) orientées dans une direction longitudinale ainsi qu'en deux deuxièmes parties annulaires (11, 12) reliant l'une à l'autre sur les deux côtés les premières parties annulaires (9, 10), et **en ce qu'**il est prévu une fente de commande entre chacune des premières parties annulaires (9, 10) et une paroi au moins localement profilée proche.

2. Unité d'insertion sanitaire selon la revendication 1, **caractérisée en ce que** le régulateur de débit présente une partie de support (14) orientée transversalement à la direction d'écoulement, partie de support (14) dans laquelle il est prévu une rainure (15) ouverte vers le côté d'écoulement, rainure (15) dans laquelle le corps d'étranglement (8) est logé.

3. Unité d'insertion sanitaire selon la revendication 2, **caractérisée en ce que** la rainure (15) porte le profilage sur au moins les côtés longitudinaux de sa paroi de rainure disposés environ de façon axialement parallèle, et **en ce que** le corps d'étranglement (8) limite la fente de commande entre lui-même et au moins les côtés longitudinaux de la paroi de rainure disposés approximativement de façon axialement parallèle.

4. Unité d'insertion sanitaire selon la revendication 2 ou 3, **caractérisée en ce qu'**au moins un support annulaire (16) est saillant dans la rainure (15), support annulaire (16) sur lequel le corps d'étranglement (8) est posé, de telle manière que ce corps d'étranglement (8) adopte une forme annulaire, qui se divise en lesdites deux premières parties annulaires (9, 10) orientées dans une direction longitudinale, ainsi qu'en lesdites deux deuxièmes parties annulaires (11, 12) reliant l'une à l'autre sur les deux côtés les premières parties annulaires (9, 10).

5. Unité d'insertion sanitaire selon la revendication 4, **caractérisée en ce que** le support annulaire (16) est formé par au moins une paroi longitudinale saillante dans la rainure (15).

6. Unité d'insertion sanitaire selon la revendication 5, **caractérisée en ce que** le support annulaire (16) est taillé respectivement sur les côtés extérieurs opposés de sa au moins une paroi longitudinale.

7. Unité d'insertion sanitaire selon la revendication 5 ou 6, **caractérisée en ce que** ladite au moins une paroi longitudinale du support annulaire (16) est arrondie sur ses côtés étroits externes.

8. Unité d'insertion sanitaire selon la revendication 7, **caractérisée en ce que** ladite au moins une paroi longitudinale du support annulaire (16) est réalisée sur ses côtés étroits externes sous la forme d'une surépaisseur de section transversale arrondie (19).

9. Unité d'insertion sanitaire selon l'une quelconque des revendications 4 à 8, **caractérisée en ce que** le profilage est formé par des sillons longitudinaux (17) orientés dans la direction d'écoulement et **en ce que** des sillons longitudinaux voisins (17) sont espacés par une partie de paroi (18) en saillie par rapport à ceux-ci de ladite au moins une paroi longitudinale formant le support annulaire (16).

10. Unité d'insertion sanitaire selon la revendication 9, **caractérisée en ce que** les sillons longitudinaux (17) du profilage présentent des plans médians longitudinaux sensiblement parallèles.

11. Unité d'insertion sanitaire selon la revendication 9 ou 10, **caractérisée en ce qu'**il est prévu sur le fond de rainure de la rainure (15) sur le côté d'évacuation des sillons longitudinaux (17) chaque fois au moins une ouverture d'écoulement traversant la partie de support (14).

12. Unité d'insertion sanitaire selon l'une quelconque des revendications 1 à 11, **caractérisée en ce que** l'unité d'insertion (1) comporte un formateur de jet, qui est placé après le régulateur de débit dans la direction d'écoulement.

13. Unité d'insertion sanitaire selon l'une quelconque des revendications 1 à 11, **caractérisée en ce que** l'unité d'insertion (1) comporte un aérateur de jet, qui est placé après le régulateur de débit dans la direction d'écoulement, et **en ce que** l'aérateur de jet mélangeant l'eau en écoulement avec de l'air ambiant présente un diviseur de jet (20) qui comporte une multiplicité d'ouvertures de division (21) qui divisent l'eau en écoulement en un nombre correspondant de jets individuels.

14. Unité d'insertion sanitaire selon la revendication 13, **caractérisée en ce que** les ouvertures de division (21) du diviseur de jet (20) se rétrécissent dans la direction d'écoulement.

15. Unité d'insertion sanitaire selon la revendication 13 ou 14, **caractérisée en ce que** les ouvertures de division (21) du diviseur de jet (20) présentent chacune une partie d'ouverture amont (22) qui se rétrécit en forme d'entonnoir, et une partie d'ouverture aval (23) qui présente de préférence une section transversale d'ouverture libre sensiblement constante.

16. Unité d'insertion sanitaire selon l'une quelconque des revendications 1 à 15, **caractérisée en ce qu'**il est prévu sur le côté frontal aval de boîtier du boîtier d'insertion (2) une structure en forme de nid d'abeilles, de filet ou de grille (34).

17. Unité d'insertion sanitaire selon la revendication 16, **caractérisée en ce que** la structure en forme de nid d'abeilles, de filet ou de grille est formée par des nervures qui se croisent en des nœuds de croisement et qui délimitent entre elles des ouvertures de sortie.

18. Unité d'insertion sanitaire selon la revendication 17, **caractérisée en ce que** la structure en forme de nid d'abeilles, de filet ou de grille (24) prévue sur le côté frontal aval de boîtier du boîtier d'insertion (2) est réalisée comme égaliseur d'écoulement, et **en ce que** les nervures délimitant les ouvertures de sortie présentent une extension longitudinale orientée dans la direction d'écoulement qui est égale ou supérieure au diamètre libre maximal des ouvertures de sortie.

19. Unité d'insertion sanitaire selon l'une quelconque des revendications 16 à 18, **caractérisée en ce que** la structure en forme de nid d'abeilles, de filet ou de grille prévue sur le côté frontal aval de boîtier du boîtier d'insertion (2) est formée d'un seul tenant avec le boîtier d'insertion (2).

20. Unité d'insertion sanitaire selon l'une quelconque des revendications 16 à 19, **caractérisée en ce qu'**il est prévu entre le diviseur de jet (20) et la structure en forme de nid d'abeilles, de filet ou de grille (24) au moins une pièce d'insertion (25, 26), qui présente également une forme de nid d'abeilles, de filet ou de grille composée de nervures se croisant mutuellement en des nœuds de croisement.

21. Unité d'insertion sanitaire selon l'une quelconque des revendications 13 à 20, **caractérisée en ce qu'**au moins une ouverture d'aération (27) est prévue dans une paroi périphérique de boîtier du boîtier d'insertion (2), et ici dans une partie de paroi succédant au diviseur de jet (20) dans la direction d'écoulement.
